## Europäisches Patentamt

(19) **European Patent Office**

**Office européen des brevets**

(11) Veröffentlichungsnummer: **0 082 321**
**B1**

(12) **EUROPÄISCHE PATENTSCHRIFT**

(45) Veröffentlichungstag der Patentschrift.
11.09.85

(51) Int. Cl.⁴ **F 16 F 1/18,** B 60 G 11/12,
B 32 B 27/00

(21) Anmeldenummer: 82110755.4

(22) Anmeldetag: 20.11.82

(54) Biegefeder aus faserverstärktem Kunststoff und Presswerkzeug für deren Fertigung.

(30) Priorität: 18.12.81 DE 3150162
14.10.82 DE 3238099

(43) Veröffentlichungstag der Anmeldung:
29.06.83 Patentblatt 83/26

(45) Bekanntmachung des Hinweises auf die Patenterteilung:
11.09.85 Patentblatt 85/37

(84) Benannte Vertragsstaaten:
FR GB IT

(56) Entgegenhaltungen:
EP - A - 0 005 916
DE - C - 1 231 967
FR - A - 1 100 286
FR - A - 1 411 011
GB - A - 230 679
US - A - 3 968 958

PATENTS ABSTRACTS OF JAPAN, Band 3, Nr. 101
(M-70), 25. August 1979, Seite 3 M 70
PATENTS ABSTRACTS OF JAPAN, Band 4, Nr. 96
(M-20)578i, 11. Juli 1980, Seite 106 M 20

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Oefner, Walter, Dipl.-Ing., Kistlerweg 2,
D-8151 Mitterdarching (DE)**
Erfinder: **Drachenberg, Franz, Brunnenstrasse 61,
D-8011 Baldham (DE)**

## Beschreibung

Die Erfindung betrifft eine Biegefeder gemäß dem Oberbegriff des Patentanspruchs 1 und deren Herstellung.

Bei einer derartigen durch die DE-C-1 231 967 bekannten Biegefeder werden die Federdickenänderungen durch einen entsprechenden Faseraufbau der Abstandsschicht erreicht. Hierzu brauchen die Fasern der Abstandsschicht nicht unbedingt unidirektional orientiert zu sein, sondern können ebenso, entsprechend der durch die EP-A-5 916 bekannten Biegefeder, eine planlose Orientierung aufweisen. Schließlich wird der funktionale Zweck der Abstandsschicht, für gleiche Federspannungen in den Federdeckschichten über die gesamte Federlänge zu sorgen, gemäß der FR-A-1 411 011 auch durch Verwendung von Fasergewebe erreicht.

Für sämtliche bekannten Ausführungsformen der Biegefeder besteht, unabhängig vom Faseraufbau und von der Form der Abstandsschicht, in der Federmitte das Problem der Krafteinleitung ohne Schwächung der Faserstränge der Deckschichten durch Bohrungen, sofern diese, etwa aus Gründen der Fertigungsvereinfachung, erst im fertigen Federgrundkörper geschaffen werden können. Hierbei geht es nicht nur um das Verhindern von Federbrüchen schlechthin. Vielmehr begünstigen solche, die Deckschichten durchdringenden, meist an den Federlängsrändern sitzenden Bohrungen Faserschäden, die an den betreffenden bei der Federdurchbiegung unter gleichzeitiger Torsion höchstbeanspruchten Stellen zu einer nach und nach fortschreitenden Biegefestigkeitsminderung führen. Diesem Problem läßt sich unter der im übrigen (natürlich) bestehenden Forderung nach größtmöglicher Verbindungssicherheit nicht schon durch einen mit der Biegefeder bloß verklemmten Beschlag beikommen.

Der Erfindung liegt daher die Aufgabe zugrunde, bei einer Biegefeder der eingangs genannten Art erst im fertigen Federgrundkörper ohne Minderung der Festigkeit der Deckschichten Bohrungen für die Krafteinleitung einbringen zu können; im übrigen soll eine die Fertigung einer solchen Biegefeder vereinfachende Vorrichtung aufgezeigt werden.

Der erste Teil dieser Aufgabe ist gemäß dem Kennzeichen des Patentanspruchs 1 gelöst, also durch eine Möglichkeit zur Beschränkung von Federanschluß-Bohrungen auf die Abstandsschicht unter Strukturierung derselben derart, daß diese Bohrungen sich wesentlich weniger festigkeitsmindernd auswirken als bei Unidirektionalfaserstrukturen oder hiervon abweichenden Strukturen ohne bestimmte Faserorientierung. Denn die vorgeschlagene kreuzweise Faserorientierung erlaubt eine Belastung der Abstandsschicht sowohl durch die Längs- als auch durch in Querrichtung wirksame Kräfte. Damit können die auftretenden Lochleibungsdrücke von der Abstandsschicht optimal aufgenommen bzw. diese entsprechend ausgelegt werden.

Der zweite Teil der vorgenannten Aufgabe ist durch ein Preßwerkzeug gemäß dem Patentanspruch 3 gelöst. Dieses hat nicht nur den Vorteil einer Einlegemöglichkeit für eine vorgeformte Abstandsschicht unter Sicherung derselben gegen ein Verschieben beim Verpressen mit den (beispielsweise im Wickelverfahren im Preßwerkzeug herstellbaren) Deckschichten. Vielmehr läßt sich mit (im Unteranspruch 4 gekennzeichneten) einfachsten Maßnahmen sicherstellen, daß es beim Schließen des Preßwerkzeugs zu keiner Verschiebung von Fasersträngen in die Trennfugen zwischen den Wangenober- und Wangenunterteilen kommt. Damit ist eine in den jeweils gewünschten Abmessungen präzise Federfertigung gewährleistet.

Die Erfindung wird nachfolgend anhand eines Ausführungsbeispiels weiter erläutert. Hierzu zeigt die Zeichnung in

Fig. 1 den Mittenabschnitt einer Blattfeder,

Fig. 2 bis 5 Verfahrensschritte bei der Fertigung einer Blattfeder gemäß Fig. 1, in Querschnittsdarstellung sämtlicher Teile.

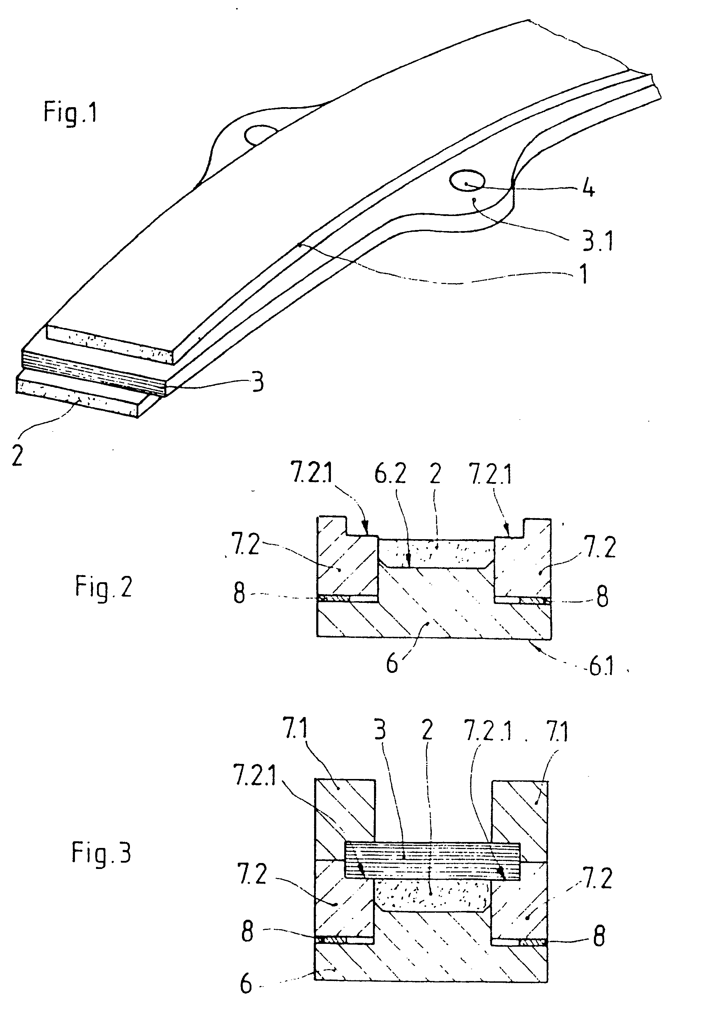

Die in Fig. 1 dargestellte gekrümmte Blattfeder mit von der Mitte zu beiden Enden hin abnehmender Dicke ist ein Schichtkörper aus Faserverbundwerkstoff. Hierbei sind zwei Deckschichten 1, 2 aus in einer Harz- oder dergleichen Bindungsmasse eingebetteten Glas- oder dergleichen Fasersträngen in unidirektionaler Faserorientierung über die gesamte Federlänge durch eine zwischengefügte Abstandsschicht 3 verbunden, welche aus einem Fasergewebe oder -gelege beispielsweise gleichen Materials aufgebaut ist, jedoch mit einer kreuzweisen Orientierung der Fasern gegenüber den Unidirektionalfasersträngen der Deckschichten 1, 2 bzw. in bezug auf die Blattfederlängsachse. Beispielsweise ist demgegenüber bei den dargestellten Faserstofflagen der Abstandsschicht 3 die Faserorientierung ±45°. Da die Abstandsschicht 3 quer- und einseitig auftretende Längskräfte, welche zu Lochleibungsdrücken in den Bohrungen 4 von Federanschluß-Laschen 3.1 der Abstandsschicht führen, aufnehmen können soll, kann für eine diesbezügliche Optimierung selbstverständlich im speziellen Anwendungsfall auch von Faserorientierungen abwechselnd ±45", 0"/90" ± 45" usw. Gebrauch gemacht werden oder auch im Falle von Fasergelegen +60", −60", 0", 0°, −60", +60° je nach Lastfall.

Diese Abstandsschicht 3 ist für die zu beiden Federenden hin abnehmende Federdicke maßgebend, was beispielsweise durch eine Schichtung der Gewebelagen mit unterschiedlicher Länge erreicht wird. Die gewählte Form der Blattfeder bzw. ihrer Abstandsschicht 3 hat den Vorteil, daß unter Federdurchbiegung mit annähernd gleichen Biegespannungen über die Federlänge gerechnet werden kann.

Für den Anschluß dieser Blattfeder, beispielsweise über einen Beschlag an einem Federträger, können die in der Federmitte vorgesehenen Bohrungen 4 im speziellen Anwendungsfall auch offen gestaltet sein. Damit durch solche erst im fertigen Federkörper geschaffene Anschlußbohrungen unidirektionale Faserstränge nicht durchtrennt, d. h., die Deckschichten 1, 2 nicht geschwächt werden, sind die Bohrungen 4 auf die unbedeckten Bereiche der Abstandsschicht 3 beschränkt, welche an den beiden Federlängsrändern aus den Deckschichten 1, 2 in Form der Federanschluß-Laschen 3.1 herausragen. Aufgrund der gewählten Anordnung der Bohrungen 4 ausschließlich in der dafür optimierten Zwischenschicht können hohe in Feder-Quer- oder Längsrichtung auftretende Kräfte in den Federanschlußbereich übergeleitet werden. Dies ist z. B. im Kfz-Bau unerläßlich, da hier die Blattfeder auch Radführungskräfte übernehmen muß.

Selbstverständlich ist eine Blattfeder der vorbeschriebenen Art, nämlich mit seitlichen Laschen 3.1 nicht auf eine Abstandsschicht 3 abnehmender Dicke beschränkt.

Für die Fertigung dieser Blattfeder wird ein Preßwerkzeug bevorzugt, bei dem gemäß Fig. 5 eine Patrize 5 und eine Matrize 6 jeweils in Form eines auf einer Grundplatte 5.1 bzw. 6.1 sitzenden Stempels 5.2 bzw. 6.2 ausgebildet ist, welcher an seinen beiden Seitenflanken durch Seitenwangen 7 geführt wird; diese begrenzen die Breite der Blattfeder bzw. ihrer Schichten 1, 2, 3. Durch eine Profilierung der Seitenwangen 7 als jeweils längsgeteilte Fassungen der Federanschluß-Laschen 3.1 mit einem Wangenober- und einem Wangenunterteil 7.1 bzw. 7.2 ist erreicht, daß zum einen die Feder-Abstandsschicht 3 nach dem Schließen des Preßwerkzeugs gegen ein Verrutschen gesichert ist und daß zum anderen überhaupt erst der nachfolgend beschriebene problemlose Fertigungsablauf möglich wird:

Gemäß Fig. 2 werden zunächst zur Bildung der unteren Deckschicht 2 der Blattfeder auf der Grundplatte 6.1 der Matrize 6 die beiden Wangenunterteile 7.2 positioniert unter loser Zwischenfügung von Distanzstücken 8. Die Distanzstücke 8 haben jeweils eine solche Dicke, daß der durch den Matrizenstempel 6.2 und die Wangenunterteile 7.2 begrenzte Formraum bis zu der für die Abstandsschicht 3 bestimmten Auflagerfläche 7.2.1 am einzelnen Wangenunterteil eine solche Höhe aufweist, die zumindest der Dicke der unteren Deckschicht 2 einschließlich eines für das Pressen nötigen Materialzuschlages entspricht. Andernfalls würde es, bei der dargestellten nötigen Materialdicke, beim Einbringen der unidirektionalen Faserstränge für die untere Deckschicht 2 einer entsprechenden — in dem Maße praktisch nicht realisierbaren — Präzision der angewendeten Fasereinbringmethode bedürfen, damit beim Schließen des Preßwerkzeuges über die vorgenannten Auflagerflächen 7.2.1 hinaus aus dem Formraum keinerlei Faserstränge und Bindungsmasse derselben in die Fuge zwischen den Wangenober- und Wangenunterteilen 7.1 bzw. 7.2 fließen kann.

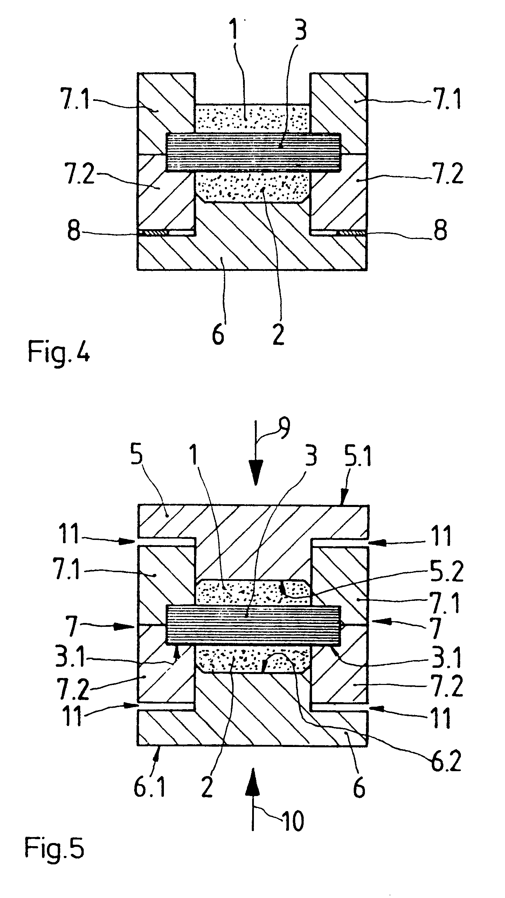

Gemäß Fig. 3 wird nach dem Einbringen der Faserstränge der unteren Deckschicht 2 die Abstandsschicht 3 aufgebracht, vorzugsweise als bereits gepreßter, formbeständiger Körper, der allerdings noch nicht ausgehärtet ist. Hiernach werden die beiden Wangenoberteile 7.1 positioniert. Die letzte Materialeinbringungsphase betrifft dann gemäß Fig. 4 die unidirektionalen Faserstränge der oberen Deckschicht 1 der Blattfeder. Schließlich wird das Preßwerkzeug durch Aufsetzen der Patrize 5 geschlossen. Die betreffende Fig. 5 zeigt, daß erst mit dem Schließen des Preßwerkzeuges die Distanzstücke 8 entfernt werden. Das anschließende Pressen durch Bewegen der Patrize 5 und Matrize 6 in den durch die Pfeile 9, 10 angegebenen Druckrichtungen kann in einer hydraulischen Presse erfolgen unter gleichzeitiger Zufuhr der für das gemeinsame Aushärten sämtlicher Schichten 1, 2, 3 nötigen Wärme. Es versteht sich, daß es hierbei nicht unbedingt zu einem Zusammenpressen der unidirektionalen Faserstränge um die Dicke der infolge der Distanzstücke 8 zwangsläufig zwischen der Matrize 6 und Patrize 5 einerseits und den Seitenwangen 7 andererseits vorhandenen Spalte 11 kommen muß, also diese bzw. die Distanzstücke ohne weiteres eine größere Dicke haben können, als der Preßschwund erfordert.

## Patentansprüche

1. Biegefeder aus faserverstärktem Kunststoff, insbesondere in Form eines gekrümmten Federblattes mit von der Mitte zu beiden Enden hin abnehmender Dicke, bei welcher Faserstränge in unidirektionaler Faserorientierung über die Federlänge zwei Deckschichten (1, 2) einer stoffschlüssig zwischengefügten Abstandsschicht (3) bilden, die aus Fasergewebe oder dergleichen besteht, dadurch gekennzeichnet, daß die Abstandsschicht (3) an beiden Federlängsrändern jeweils in Form einer Federanschluß-Lasche (3.1) aus den Deckschichten (1, 2) herausragt und daß gegenüber den Fasersträngen der Deckschichten (1, 2) die Fasern der Abstandsschicht (3) in überwiegend kreuzweiser Orientierung angeordnet sind.

2. Biegefeder nach Anspruch 1, dadurch gekennzeichnet, daß Federanschluß-Bohrungen (4) auf die beiden Federanschluß-Laschen (3.1) beschränkt sind.

3. Preßwerkzeug bestehend aus Patrize (5) und Matrize (6) zur Herstellung einer Biegefeder nach Anspruch 1, dadurch gekennzeichnet, daß die Patrize (5) und Matrize (6) jeweils in Form eines auf einer Grundplatte (5.1 bzw. 6.1) sitzenden Stempels (5.2 bzw. 6.2) ausgebildet ist, wobei jeder Stempel an seinen beiden Seitenflanken durch die Deck- und Abstandsschichtbreite begrenzende Seitenwangen (7) geführt ist, welche als jeweils längsgeteilte Fassungen der Federanschluß-Laschen (3.1) mit einem Wangenober- und einem Wangenunterteil (7.1 bzw. 7.2) profiliert sind.

4. Preßwerkzeug nach Anspruch 3, dadurch gekennzeichnet, daß zwischen der Grundplatte (6.1) der Matrize (6) und den Wangenunterteilen (7.2) Distanzstücke (8) wenigstens von solcher Dicke lose eingefügt sind, daß ein durch den Matrizenstempel (6.2) und die Wangenunterteile (7.2) begrenzter Formraum bis zu einer für die Abstandsschicht (3) bestimmten Auflagerfläche (7.2.1) am einzelnen Wangenunterteil eine Höhe aufweist, die zumindest der Dicke der unteren Deckschicht (2) einschließlich eines für das Pressen nötigen Materialzuschlages entspricht.

## Claims

1. A bending spring made from fibre-reinforced plastics material, more especially in the form of a curved leaf spring with a thickness which decreases from the centre towards both ends, in which fibre strands, in unidirectional fibre orientation over the spring length, form two surface layers (1, 2) of an intermediate layer (3) which is interpolated therebetween and is materially connected thereto and which consists of fibre fabric or the like, characterized in that the intermediate layer (3) juts out on both longitudinal edges of the spring from the surface layers (1, 2) in the form of a spring connection strap (3.1) and in that as compared with the fibre strands of the surface layers (1, 2) the fibres of the intermediate layer (3) are arranged in a predominantly crosswise orientation.

2. A bending spring according to claim 1, characterized in that spring connection bores (4) are restricted to the two spring connection straps (3.1).

3. A pressing tool consisting of upper die (5) and bottom die (6) for producing a bending spring according to claim 1, characterized in that the upper die (5) and bottom die (6) is in each case designed in the form of a die (5.2 or 6.2 respectively) seated on a base plate (5. 1 or 6.1 respectively), in which respect each die is guided at its two side flanks by side cheeks (7) which limit the surface and intermediate layer width and which are profiled in each case as longitudinally-split frames of the spring connection straps (3.1) with a cheek upper and a cheek lower part (7.1 or 7.2 respectively).

4. A pressing tool according to claim 3, characterized in that between the base plate (6.1) of the bottom die (6) and the cheek lower parts (7.2) are loosely inserted distance pieces (8) of at least such a thickness that a moulding chamber bounded by the female die (6.2) and the cheek lower parts (7.2) has, as far as a bearing surface (7.2.1) on the individual cheek lower part intended for the intermediate layer (3), a height which corresponds at least to the thickness of the lower surface layer (2) including a material increase necessary for the pressing.

## Revendications

1. Ressort de flexion en matière synthétique renforcée de fibres, en particulier sous la forme d'une lame de ressort courbée d'épaisseur allant en diminuant du centre vers les extrémités, dans lequel des écheveaux de fibres à orientation unidirectionnelle des fibres forment, sur toute la longueur du ressort, deux couches de recouvrement (1, 2) d'une couche d'écartement (3) interposée par liaison par matière et réalisée en tissu de fibres ou analogue, caractérisé par le fait que la couche d'écartement (3), sur les deux bords longitudinaux du ressort, fait respectivement saillie sous la forme d'une patte de raccordement (3.1) en dehors des couches recouvrement (1.2) et que les fibres de la couche d'écartement (3) sont disposées suivant une orientation principalement croisée par rapport aux écheveaux de fibres des couches de recouvrement (1, 2).

2. Ressort de flexion selon la revendication 1, caractérisé par le fait que des perçages (4) de raccordement du ressort sont limités aux deux pattes de raccordement (3.1).

3. Outil de moulage par compression comprenant un moule mâle (5) et un moule femelle (6) pour la fabrication d'un ressort de flexion selon la revendication 1, caractérisé par le fait que le moule mâle (5) et le moule femelle (6) sont respectivement réalisés sous la forme d'un poinçon (5.2, 6.2) reposant sur une plaque de base (5.1, 6.1), chaque poinçon étant guidé au niveau de ses deux flancs latéraux par les joues (7) délimitant la largeur des couches de recouvrement et d'écartement et respectivement profilées sous forme de montures, divisées longitudinalement, des pattes de raccordement (3.1) avec une partie de joue supérieure et une partie de joue inférieure (7.1, 7.2).

4. Outil de moulage par compression selon la revendication 3, caractérisé par le fait qu'entre la plaque de base (6.1) du moule femelle (6) et les parties de joues inférieures (7.2) sont insérées librement des pièces d'espacement (8) ayant au moins une épaisseur suffisante pour qu'une chambre de moulage délimitée par le poinçon (6.2) du moule femelle et les parties de joues inférieures (7.2) présentent, jusqu'à une surface d'appui (7.2.1) destinée à la couche d'écartement (3) venant s'appliquer sur les différentes parties de joues inférieures, une hauteur qui correspond au moins à l'épaisseur de la couche de recouvrement inférieure (2), y compris un supplément de matière nécessaire au pressage.

Fig.1

Fig.2

Fig.3

Fig. 4

Fig. 5